# EUROPÄISCHE PATENTSCHRIFT

(11) **EP 0 407 767 B1**
(45) Veröffentlichungstag und Bekanntmachung des Hinweises auf die Patenterteilung: **14.07.1993**
(21) Anmeldenummer: 90111499.1
(22) Anmeldetag: 19.06.1990
(51) Int. Cl.: B64D 11/00

(54) **Trageinrichtung für einen Vorhang**
Support device for a curtain
Dispositif de support pour un rideau

(30) Priorität: 10.07.1989 DE 3922580
(43) Veröffentlichungstag der Anmeldung: 16.01.1991
(73) Patentinhaber: Deutsche Aerospace Airbus Gesellschaft mit beschränkter Haftung, 21129 Hamburg (DE)
(72) Erfinder: Schumacher, Markus, D-2150 Buxtehude (DE)

(56) Entgegenhaltungen:
- AU-B- 523 380
- US-A- 4 597 549
- AVIATION WEEK & SPACE TECHNOLOGY, Band 125, Nr. 16, 20. Oktober 1986, Seite 52, New York, US; "Airbus proposes deluxe passenger facilities for A340 transport"

## Beschreibung

Die Erfindung bezieht sich auf eine Trageinrichtung nach dem Oberbegriff des Anspruchs 1.

Derartige Einrichtungen dienen als Querträger für einen Vorhang, wodurch Fahrgasträume, insbesondere Kabinen in Luftfahrzeugen, in verschiedene Abschnitte, beispielsweise in verschiedene Klassen, unterteilt werden. Die Anbringung dieser Einrichtungen erfolgt nahe der Kabinendecke und ist variabel, das heißt, diese Einrichtungen können in Kabinenlängsrichtung an unterschiedlichen Stellen befestigt werden. Das Setzen und Lösen einer solchen Einrichtung geschieht dabei ohne Werkzeuge. Die variable Anbringbarkeit der Einrichtung wird dadurch erreicht, daß diese im wesentlichen aus zwei gelenkig miteinander verbundenen Trägerelementen besteht, die an ihren äußeren Enden je einen Auflagerfuß aufweisen und die gelenkige Verbindung in gestrecktem Zustand verriegelbar ist. Zur Aufnahme der Auflagerfüße sind in geeigneter Höhe an den Kabinen-Seitenwänden Längsnuten angeordnet. Zur Befestigung der Einrichtung werden die beiden Auflagerfüße bei angewinkelter Position der Trägerelemente in die gegenüber liegenden Längsnuten eingesetzt und die Trägerelemente anschließend in gestreckte Position gebracht und verriegelt. Infolge einer hierbei auftretenden Kniehebelwirkung in Verbindung mit den federbelasteten Auflagerfüßen ergibt sich ein kraftschlüssiger Sitz der Einrichtung. Es wird gefordert, daß auch Personen von überdurchschnittlicher Körpergröße beim Passieren der Kabinengänge nicht durch die Trageinrichtungen behindert werden. Dies hat zur Folge, daß Personen von unterdurchschnittlicher Körpergröße zum Setzen oder zum Lösen der Einrichtungen eine Trittleiter oder dergleichen benötigen.

Demgemäß liegt der Erfindung die Aufgabe zugrunde, eine gattungsgemäße Trageinrichtung so auszubilden, daß diese von unterdurchschnittlich kleinen Personen ohne zusätzliche Mittel wie Trittleitern oder dgl. leicht zu handhaben ist, wobei zugleich überdurchschnittlich große Personen durch die Einrichtung beim Passieren der Gänge nicht behindert werden.

Diese Aufgabe wird bei einer gattungsgemäßen Trageinrichtung durch die kennzeichnenden Merkmale des Patentanspruchs 1 gelöst.

Dabei ist insbesondere von Vorteil, daß die Trageinrichtung nicht nur von kleineren Personen gesetzt und gelöst werden kann sondern dabei auch eine einfachere Handhabung ermöglicht.

Vorteilhafte Weiterbildungen der Erfindung sind in den Unteransprüchen angegeben.

So besteht ein Vorteil der Ausgestaltung nach Anspruch 2 darin, daß ein unbeabsichtigtes Lösen der Einrichtung weitgehend vermieden wird.

Ein Vorteil der Ausgestaltung nach Anspruch 3 besteht darin, daß der allgemein bekannte Aufforderungscharakter eines Handgriffes vermieden wird, wobei der Griff gleichzeitig eine nützliche Zusatzfunktion als Träger für ein Hinweisschild erfüllt.

Ein Vorteil der Ausgestaltung nach Anspruch 4 besteht darin, daß Fertigungsungenauigkeiten der Trageinrichtung und/oder der Kabinenwandung ohne Justierarbeiten aufgefangen werden.

Die Erfindung ist anhand der Zeichnung dargestellt und nachfolgend näher erläutert. Es zeigen
- Fig. 1: eine Ansicht einer Trageinrichtung,
- Fig. 2: den Schnitt II - II nach Fig. 1,
- Fig. 3: die Ansicht A nach Fig. 1,
- Fig. 4: die Ansicht B nach Fig.1 und
- Fig. 5: die Einzelheit V nach Fig. 1.

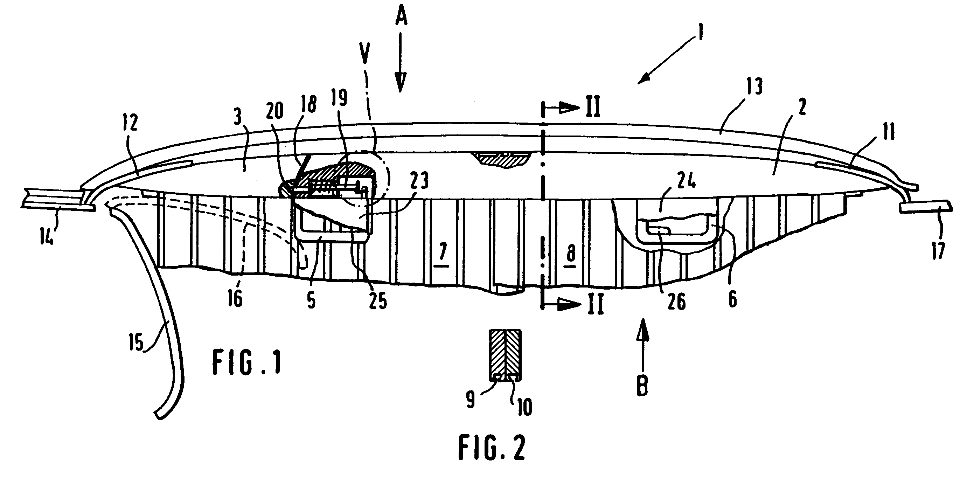

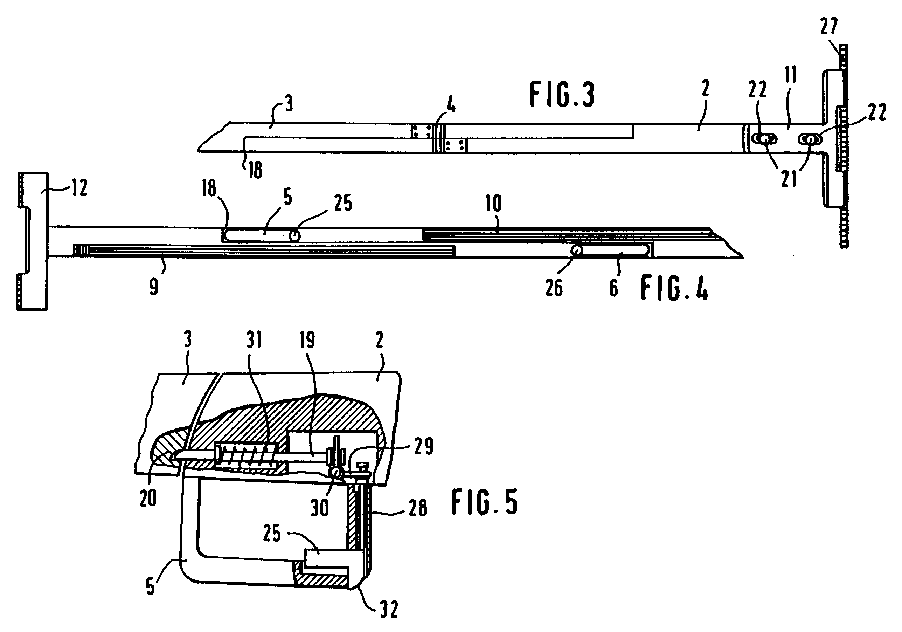

Die Figuren. 1 und 2 zeigen eine Trageinrichtung 1, bestehend aus den beiden Trägerelementen 2 und 3, die durch ein Gelenk 4 miteinander verbunden sind. Dieses Gelenk 4 ist als Doppelscharnier ausgebildet, so daß für Stauzwecke eine Schwenkung um 180° ermöglicht wird. An den äußeren Enden der Trägerelemente 2,3 befindet sich je ein Auflagerfuß 11 bzw. 12, der in die zwischen dem Kabinenhimmel 13 und dem am Einbauort befindlichen Wandelement bestehende Fuge eingesetzt ist. Der im Bild links befindliche Auflagerfuß 12 ruht auf einer zu einem Gepäckkasten gehörenden Wandung 14. Die entsprechende Klappe des Gepäckkastens ist mit 15 bezeichnet und in ihrer geschlossenen Position dargestellt. Die gestrichelte Darstellung 16 zeigt die Klappe 15 in geöffneter Position. Der im Bild rechts befindliche Auflagerfuß 11 ruht auf einem Wandelement 17. Jedes Trägerelement 2,3 ist vom jeweiligen Auflagerfuß 11,12 her über das Gelenk 4 hinaus verlängert und das vom Auflagerfuß 11,12 abgewandte Ende des Trägerelementes 2,3 weist jeweils einen Handgriff 5,6 auf. Die Handgriffe 5 und 6 dienen zum Anbringen bzw. zum Versetzen der Einrichtung und sind an der Unterseite der Trägerelemente 2 und 3 angeordnet. Die gezeigte Trageinrichtung 1 trägt zwei in deren Mitte überlappende Vorhanghälften 7 und 8, die letztlich die Kabinenteiler bilden. Dabei zeigt Fig. 2 die Dickenverhältnisse der Trägerelemente 2,3 an der Stelle des Schnittes II-II. Hier erscheinen auch die Vorhangschienen 9 und 10 im Schnitt. Jedem Handgriff 5,6 ist eine Verriegelung zugeordnet, die im wesentlichen seitens des Trägerelementes 2 aus einem axial geführten federbelasteten Stift 19 und seitens des Trägerelementes 3 aus einer Bohrung 20 besteht. Im eingebauten Zustand der Trageinrichtung 1 fluchtet die Bohrung 20 mit dem Stift 19, so daß dieser durch die betreffende Feder in die Bohrung eingeschoben und die Verriegelung damit wirksam ist. Zum Lösen der Verriegelung ist je Handgriff 5,6 ein auf dessen Innenseite angeordnetes Betätigungselement 25 bzw. 26 vorgesehen. Das Schließen der Verriegelung geschieht automatisch, wenn die Trageinrichtung 1 gesetzt wird. Im verriegelten Zustand bildet die Trageinrichtung 1, einen steifen Träger, der den zwischen den Wandelementen 14 und 17 befindlichen Abstand überspannt. Die Handgriffe 5,6 sind durch Hinweisschilder 23,24 abgedeckt, so daß diese nicht als Handgriffe erkennbar sind. Zum Setzen und Lösen der Trageinrichtung 1 können die Hinweisschilder 23,24 nach oben geklappt werden, damit die Handgriffe 5,6 zugänglich sind.

Die Figuren 3 und 4 zeigen die Trageinrichtung 1, von oben bzw. von unten. Hierdurch wird die T-Form der Auflagerfüße 11 und 12 deutlich. Der im Bild rechte Auflagerfuß 11 ist durch zwei Schrauben 21 mit dem Trägerelement 2 verbunden, wobei aufgrund von Langlöchern 22 sichergestellt ist, daß der Auflagerfuß 11 gegenüber dem Trägerelement 2 innerhalb vorbestimmter Grenzen positionierbar ist. Im Gegensatz hierzu ist der Auflagerfuß 12 fest montiert. Die Wandteile 14 und 17 können zur Herstellung einer formschlüssigen Verbindung mit den Auflagerfüßen 11,12 eine Verzahnung 27 aufweisen. Zum Setzen der Trageinrichtung 1 wird diese an den Handgriffen 5,6 angefaßt und die beiden Trägerelemente 2,3 werden um das Gelenk 4 scherenartig geschwenkt, um die Auflagerfüße 11,12 in die seitlichen Fugen der Kabinenwandung einsetzen zu können. Nach Überprüfung der Auflagerfüße 11,12 auf exakten Sitz wird die Trageinrichtung 1 in die gestreckte Position gebracht. Dabei rasten die Verriegelungen automatisch ein. Der Festsitz der Einrichtung ergibt sich durch eine in deren Längsrichtung wirkende vorbestimmte Druckspannung, die sich bei richtiger Positionierung des Auflagerfußes 11 infolge einer Kniehebelwirkung leicht ergibt. Es ist auch denkbar, daß beide Auflagerfüße federbelastet ausgebildet sind. Zum Lösen der Trageinrichtung 1 ist es erforderlich, daß beide Betätigungselemente 25,26 gleichzeitig betätigt werden. Hierdurch wird ein unbeabsichtigtes Lösen der Einrichtung weitgehend vermieden.

Fig. 5 zeigt den Handgriff 5 mit Einzelheiten der Verriegelung nach Fig. 1 mit dem Stift 19, der Bohrung 20 und dem Betätigungselement 25. Mit dem Betätigungselement 25 ist eine auf einen Winkelhebel 29 wirkende Zugstange 28 verbunden, wobei der um eine Achse 30 schwenkbare Winkelhebel 29 seinerseits auf den Stift 19 wirkt. Bei Eindrücken des Betätigungselementes 25 wird auf die Stange 28 eine Zugkraft ausgeübt. Hierdurch erfährt der Winkelhebel 29 eine Rechtsdrehung, so daß der Stift 19 entgegen der Kraft der Feder 31 nach rechts bewegt wird, womit die Verriegelung gelöst ist. Bei ordnungsgemäßer Verriegelung nimmt der Stift 19 die gezeigte linke Position ein, wodurch das Betätigungselement 25, wie gezeigt, aus der Kontur des Griffes 5 hervortritt. Bei mangelhafter Verriegelung, d.h. bei nicht eingerastetem Stift 19, wird der als Signalstift 32 ausgebildete Bereich des Betätigungselementes 25 sichtbar. Infolge einer geeigneten Farbgebung des Signalstiftes 32 wird auf die vorgenannte unklare Situation deutlich hingewiesen.

Eine nicht gezeigte Ausgestaltung der Erfindung besteht darin, daß mindestens ein Auflagerfuß annähernd in Längsrichtung des betreffenden Trägerelementes 2,3 geführt und mit einer Druckfeder belastet ist.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

## Patentansprüche

1. Trageinrichtung für einen Vorhang zur Teilung der Kabine eines Passagierflugzeuges quer zur Rumpfachse, im wesentlichen bestehend aus einem aus zwei gelenkig miteinander verbundenen Trägerelementen gebildeten Querträger, wobei das Gelenk in gestreckter Form des Trägers verriegelbar ist und die äußeren Enden des Querträgers einen in etwa T-förmigen Auflagerfuß aufweisen, dadurch **gekennzeichnet**, daß jedes Trägerelement (2,3) vom Auflagerfuß (11,12) über das Gelenk (4) hinaus verlängert ist und das vom Auflagerfuß (11,12) abgewandte Ende des Trägerelementes einen Handgriff (5,6) aufweist.

2. Trageinrichtung nach Anspruch 1, dadurch **gekennzeichnet**, daß jedem Handgriff (5,6) eine Verriegelung zugeordnet ist, die im wesentlichen aus einem axial geführten federbelasteten Stift (19) besteht, der mit einer jeweils am gegenüberliegenden Trägerelement (2,3) angeordneten Bohrung (20) zusammenwirkt.

3. Trageinrichtung nach Anspruch 1 oder 2, dadurch **gekennzeichnet**, daß die Handgriffe (5,6) durch Hinweisschilder (23,24) abgedeckt sind.

4. Trageinrichtung nach einem der Ansprüche 1 bis 3, dadurch **gekennzeichnet**, daß mindestens ein Auflagerfuß (11,12) annähernd in Längsrichtung des betreffenden Trägerelementes (2,3) geführt und mit einer Druckfeder belastet ist.

5. Trageinrichtung nach einem der Ansprüche 1 bis 4, dadurch **gekennzeichnet**, daß das Gelenk (4) als Doppelscharnier ausgebildet ist.

6. Trageinrichtung nach einem der Ansprüche 1 bis 5, dadurch **gekennzeichnet**, daß die Auflagerfüße (11,12) an eine Verzahnung angepaßt sind.

## Claims

1. A support device for a curtain for dividing the cabin of a passenger aircraft transversely to the axis of the fuselage, consisting essentially of a transverse support formed of two support elements connected together in articulated manner, the joint in the extended form of the support being lockable and the outer ends of the transverse support having a bearing foot of substantially T-shape, characterised in that each support element (2,3) is extended in the direction from the bearing foot (11,12) beyond the joint (4) and the end of the support element remote from the bearing foot (11,12) has a handle (5,6).

2. A support device according to claim 1, characterised in that a locking device is associated with each handle (5,6), the locking device consisting essentially of a pin (19) which is guided axially in a spring-biased manner, and which co-operates with a respective bore (20) arranged at the opposite support element (2,3).

3. A support device according to claim 1 or 2, characterised in that the handles (5,6) are covered by instruction plates (23,24).

4. A support device according to any one of claims 1 to 3, characterised in that at least one bearing foot (11,12) is guided substantially longitudinally of the respective support element (2,3) and is biased by a compression spring.

5. A support device according to any one of claims 1 to 4, characterised in that joint (4) is constructed as a double hinge.

6. A support device according to any one of claims 1 to 5, characterised in that the bearing feet (11,12) are adapted to a tooth construction.

## Revendications

1. Dispositif de support pour un rideau servant à la séparation d'une cabine d'un avion pour passagers perpendiculairement à l'axe du fuselage, consistant essentiellement en un support transversal formé de deux éléments de support reliés l'un à l'autre de façon particulière, l'articulation pouvant être verrouillée quand le support est dans sa position allongée et les extrémités extérieures du support transversal présentant un pied d'appui sensiblement en forme de T, dispositif de support caractérisé en ce que chaque élément de support (2, 3) est prolongé à partir du pied d'appui (11, 12) par l'articulation (4) et l'extrémité située à l'opposé du pied d'appui (11, 12) de l'élément de support présente une poignée (5, 6).

2. Dispositif de support selon la revendication 1, caractérisé en ce qu'un verrouillage est associé à chaque poignée (5, 6), verrouillage qui consiste essentiellement en un doigt (19) comprimé par un ressort s'étendant axialement, qui coopère avec un alésage (20) disposé respectivement sur l'élément de support situé en regard (2, 3).

3. Dispositif de support selon la revendication 1 ou 2, caractérisé en ce que les poignées (5, 6) sont recouvertes par des pancartes indicatrices (23, 24).

4. Dispositif de support selon l'une des revendications 1 à 3, caractérisé en ce qu'au moins un pied d'appui, (11, 12) est orienté approximativement dans le sens longitudinal de l'élément de support correspondant (2, 3) et est comprimé par un ressort de pression.

5. Dispositif de support selon l'une des revendications 1 à 4, caractérisé en ce que l'articulation (4) est constituée comme une charnière double.

6. Dispositif de support selon les revendications 1 à 5, caractérisé en ce que les pieds d'appui (11, 12) sont ajustés à une denture.
